# EUROPÄISCHE PATENTSCHRIFT

(11) **EP 1 641 688 B1**
(45) Veröffentlichungstag und Bekanntmachung des Hinweises auf die Patenterteilung: **29.08.2007**
(21) Anmeldenummer: 04737075.4
(22) Anmeldetag: 21.06.2004
(51) Int. Cl.: B65G 17/16, B65G 17/06

(54) **FÖRDEREINRICHTUNG ZUM FÖRDERN VON FÖRDERGUT VORZUGSWEISE AUF PALETTEN MIT ZWEI SEITLICHEN UMLAUFENDEN FÖRDERKETTEN**
TRANSPORT DEVICE FOR TRANSPORTING GOODS, PREFERABLY ON PALLETS, COMPRISING TWO LATERALLY PERIPHERAL TRANSPORT CHAINS
DISPOSITIF DE TRANSPORT DESTINE A TRANSPORTER DES MARCHANDISES, DE PREFERENCE SUR DES PALETTES, COMPORTANT DEUX CHAINES DE TRANSPORT LATERALES PERIPHERIQUES

(30) Priorität: 02.07.2003 DE 20310084 U
(43) Veröffentlichungstag der Anmeldung: 05.04.2006
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2004/006688
(87) Internationale Veröffentlichungsnummer: WO 2005/003000

(56) Entgegenhaltungen:
- DE-A- 2 045 802
- DE-A- 2 737 181
- FR-A- 2 807 018
- US-A- 3 621 986
- US-A- 4 930 623
- US-A- 6 070 716

## Beschreibung

Die Erfindung betrifft eine Fördereinrichtung zum Fördern von Fördergut, vorzugsweise auf Paletten oder dergleichen, längs einer Förderstrecke mit zumindest zwei seitlichen angetriebenen umlaufenden Zugmitteln, insbesondere Förderketten.

Paletten werden bisher entweder auf Rollen oder auf Ketten transportiert. Rollen funktionieren nur im Paletten-Längstransport, wobei aber die Laufruhe, abhängig von der Rollenteilung, nicht besonders gut ist. Ketten sind im Längs- und Quer-Transport einsetzbar. Die Auflagefläche zur Palette ist relativ gering. Dementsprechend gering ist auch die Schonung der Paletten, vor allem bei hohen Lasten. Die Kette muß immer geschmiert werden, ist dadurch "schmutzig" und verschmutzt auch das Ladegut.

Das US-Patent 4,930,623 offenbart eine Fördereinrichtung gemäß dem Oberbegriff des Anspruchs 1.

Ausgehend vom vorgenannten Stand der Technik ist es Aufgabe der Erfindung, eine Fördereinrichtung der eingangs genannten Art zu schaffen, welche bei einfachem Aufbau und vielseitigem Einsatz vorzugsweise schweres Fördergut, Paletten oder dergleichen produktschonend und gleichwohl geräuscharm fördert.

Zur Lösung dieser Aufgabe wird erfindungsgemäß die Fördereinrichtung mit den Merkmalen des unabhängigen Anspruchs 1 vorgeschlagen.

Vorteilhafte Weiterbildungen des Erfindungsgegenstands sind in den Ansprüchen 2 bis 12 angeführt.

Ein wesentlicher Erfindungsaspekt ist, daß am umlaufenden Zugmittel Tragglieder befestigt, vorzugsweise angelenkt, sind, auf denen das Fördergut oder die Palette auflastet.

Die Tragglieder sind bevorzugt Kunststoffteile, insbesondere Formteile, welche vorzugsweise mit Selbstschmiereffekt, guter Gleitfähigkeit, guter Druckfestigkeit und/oder guter Schlagzähigkeit ausgestattet sind.

Eine bevorzugte Fördereinrichtung ist also eine Kunststoff-Glieder-Kette, bei der die Last auf den Kunststoffgliedern ruht und auf einer Stahlführung gleitend abgetragen wird.

Das Lade- oder Fördergut steht auf einer ausreichend großflächigen, sauberen, im wesentlichen geschlossenen Fläche und wird von dieser schonend und leise transportiert.

Bei bekannten Ausführungen steht das Fördergut direkt auf der Kette und kommt somit unmittelbar mit dem Schmierstoff der Kette in Kontakt. Ein zwangsläufiges Verschmutzen des Fördergutes ist die Folge. Da dadurch der Schmierstoff von der Kette entfernt wird, muß diese entsprechend oft nachgeschmiert werden. Umgekehrt gelangt Schmutz oder Abtrieb von Fördergut direkt auf die Kette und auf die Kettenführung. Demgegenüber steht das Fördergut bei der Erfindung auf einer sauberen Kunststoffoberfläche. Schmutz vom Fördergut gelangt nicht direkt auf die Kette.

Auch ergibt sich ein optisches schönes Erscheinungsbild. Das Zugmittel, vorzugsweise eine Kette, ist nicht sichtbar. Dadurch wirkt der Förderer ästhetisch und modern. Es ergeben sich große gestalterische Freiheiten in bezug auf Form und Farbe des Förderers, der mit einer Verkleidung versehen sein kann.

Auch ergeben sich verbesserte Arbeitsbedingungen für Bedienungspersonen. Kettenförderer werden auch in manuellen Stationen eingesetzt. Dort werden z. B. Paletten von Menschen beladen oder entladen. Es wird auch direkt von Paletten kommissioniert. Dabei hantieren in unmittelbarer Nähe von laufenden Ketten Menschen, die nunmehr erfindungsgemäß geschützt werden. Durch den Kettenschutz ergibt sich auch keine Schmutzbelastung für Arbeiter. Die Erfindung schafft mithin sicherheitstechnische Vorteile durch eine annähernd geschlossene, saubere Oberfläche.

Die erfindungsgemäße Fördereinrichtung kann als Raupenförderer bezeichnet werden, der für denselben Einsatzzweck konzipiert ist wie ein bekannter Kettenförderer, also für das Quer- und Längsfördern von vorzugsweise schweren Fördergütern wie Paletten, Gitterboxen, Skids oder dergleichen. Beim Querfördern von Paletten ist eine zusätzliche Unterstützung der mittleren Kufe zweckmäßig, entweder, indem man den Förderer 3-strängig ausführt, also mit drei angetriebenen Plattenketten, oder durch Anbringen einer zusätzlichen Rollen- oder Gleit-Leiste in der Mitte.

Weitere vorteilhafte Merkmale der Erfindung ergeben sich aus der nachfolgenden Beschreibung, in der bevorzugte Ausführungsbeispiele der Erfindung anhand der Zeichnung näher erläutert sind; es zeigen:
- Figur 1: eine erfindungsgemäße Fördereinrichtung in schematischer perspektivischer Ansicht,
- Figur 2: die Einzelheit eines Zugmittel-Trums mit einem Tragglied in perspektivischer Ansicht,
- Figur 3: die Einzelheit nach Figur 2 in einer schematischen Stirnansicht in Auflastung auf einer Führungsschiene, und
- Figuren 4 und 5: ein anderes Tragglied nebst Zugmittel-Trum in Darstellungen entsprechend den Figuren 2 und 3 der ersten Ausführungsvariante.

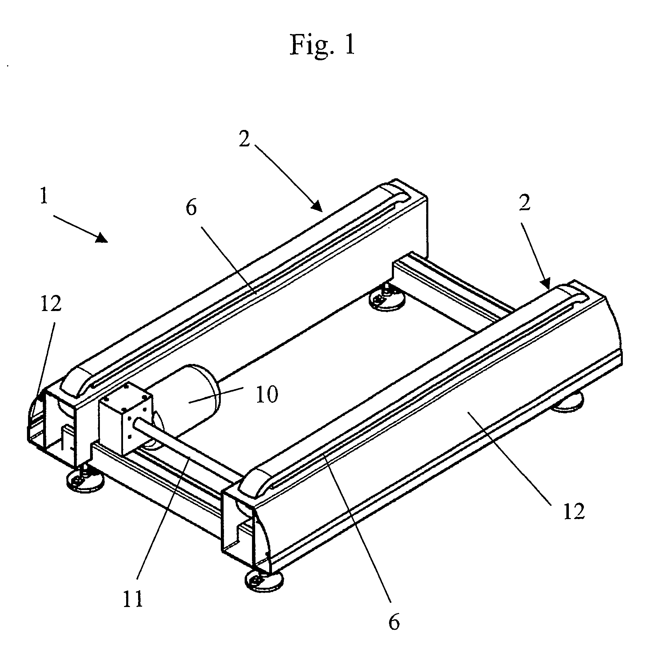

In den Figuren 1 bis 3 ist in einer ersten Ausführungsform eine Fördereinrichtung 1 zum Fördern von Fördergut auf Paletten oder dergleichen längs einer Förderstrecke mit zwei seitlichen angetriebenen umlaufenden Förderketten 2 dargestellt.

Die Fördereinrichtung 1 besteht aus Seitenteilen und Querstreben und besitzt einen einzigen Getriebemotor 10, welcher eine querverlaufende Antriebswelle 11 direkt antreibt, auf welcher Antriebsritzel für die Förderkette 2 sitzen und mit den seitlichen umlaufenden Förderketten kämmen und diese antreiben. Gespannt wird direkt an den Umlenkritzeln der umlaufenden Förderketten.

Der Förderer kann auch so gestaltet sein, daß der Antrieb an einer Seite an ein Seitenteil angeflanscht ist and an der anderen Seite eine Synchronisationswelle sitzt, die zum Spannen der Kette verschoben wird. Gegebenenfalls können auch an beide Seitenteile Getriebemotoren angeflanscht sein.

Im besonderen besitzt die Fördereinrichtung 1 zwei seitliche angetriebenen umlaufende Förderketten mit angelenkten Traggliedern 3, auf denen das Fördergut oder die Palette auflastet.

Die Tragglieder 3 sind längs der Förderkette dicht aneinander in Reihe angeordnet und decken die umlaufende Förderkette 2 im wesentlichen ab.

Jede umlaufende Förderkette 2 weist eigene Tragglieder 3 auf, die nicht direkt miteinander verbunden und gleich und einstückig ausgebildet sind sowie eine flächige Oberseite 4 haben.

Die Tragglieder 3 besitzen ausschließlich Tragefunktion und die Förderketten 2 ausschließlich Zugfunktion. Hierbei weisen die Tragglieder 3 zwei seitliche untere Gleitflächen 5 auf, und es gleiten die Tragglieder auflastend auf einer stationären Schiene 6 in Form einer nichtrostenden Stahlschiene, die die Reibungswärme im Betrieb ableitet.

Die Schiene 6 besitzt Längsführungsfunktion für die Tragglieder 3 oder die Förderketten 2.

Die Förderketten 2 und die Schienen 6 sind jeweils mit einer seitlichen Wandverkleidung 12 abgedeckt.

Insbesondere sind die Tragglieder Mitnehmer in Form von Kunststoffteilen, welche Formteile sind und mit gutem Selbstschmiereffekt, guter Gleitfähigkeit, guter Druckfestigkeit und guter Schlagzähigkeit ausgestattet sind.

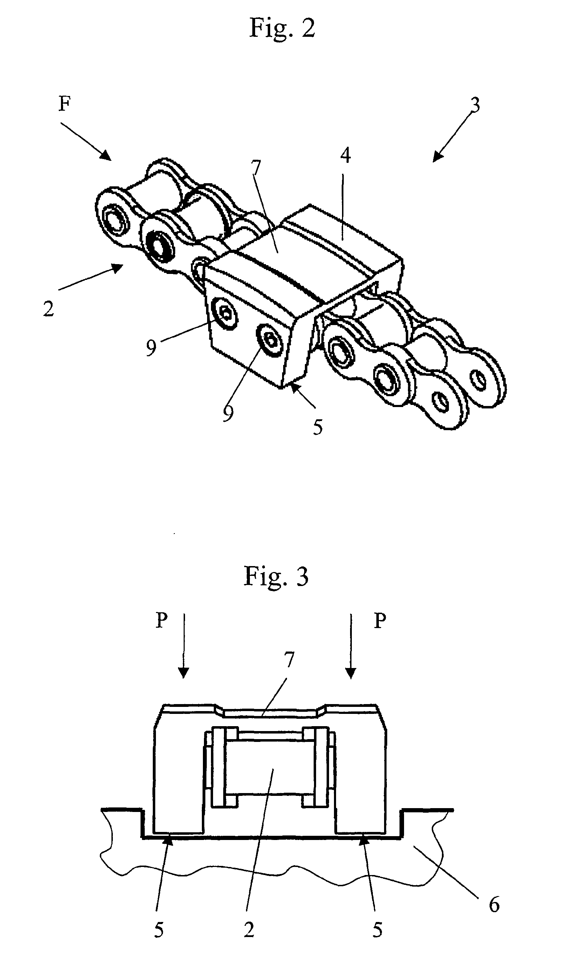

Die Oberseite 4 der Tragglieder 3 weist in Förderrichtung F eine geringe Wölbung nach oben auf und besitzt in Förderrichtung F im Bereich der Förderkette 2 eine mittige flächige Vertiefung 7, dergestalt, daß bei Auflage eines Fördergutes oder einer Palette die Auflast P senkrecht nach unten auf die Stahlschiene übertragen wird. Dabei weisen die Tragglieder 3 im Querschnitt im wesentlichen die Form eines umgekehrten "U" auf, wie dies insbesondere den Figuren 2 und 3 zu entnehmen ist.

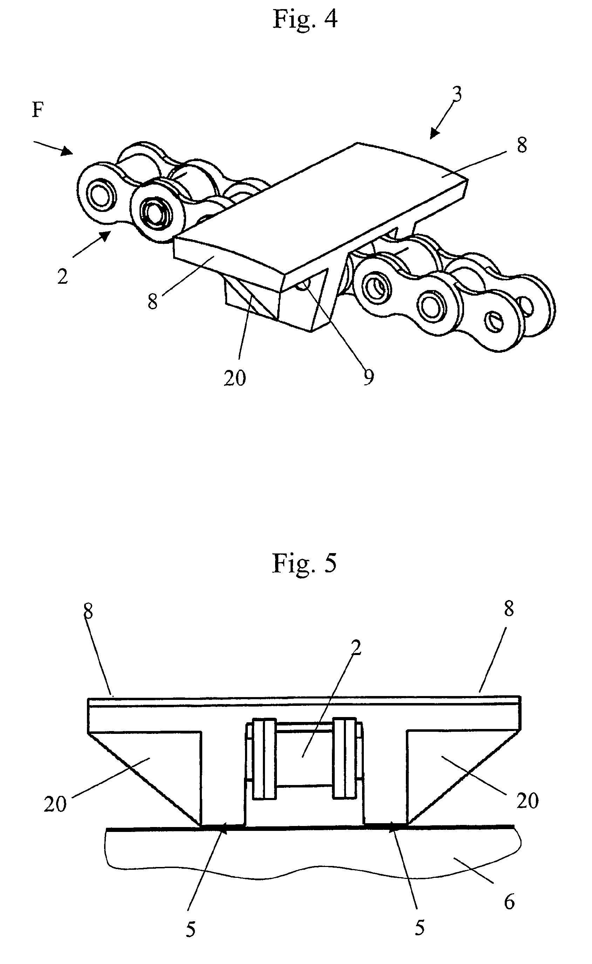

In den Figuren 4 und 5 sind bei einer Fördereinrichtung 1 der vorgenannten Bauart anders konzipierte Tragglieder 3 verwendet, welche eine größere Auflagefläche für auflastendes Fördergut aufweisen.

Insbesondere besitzen die Tragglieder 3 im Querschnitt im wesentlichen die Form eines "Doppel- T", wobei seitlich von der Förderkette 2 noch integrierte obere Abstützflächen 8 für das Fördergut bzw. die Palette vorgesehen sind, welche die vorgenannte größere Auflagefläche bewirken. Die oberen seitlichem Abstützflächen 8 sind unten durch vertikale Querstreben 20 unterstützt, welche die Auflast des Förderguts schräg nach unten auf die untere Gleitfläche 5 abtragen.

Die Tragglieder 3 nach der ersten wie nach der zweiten Variante können zweischichtig ausgebildet sein und dann eine obere elastische Schicht besitzen, welche als nachgiebiges rutschfestes flächiges Tragpolster dient.

Jedes Tragglied 3 ist quer zur Förderrichtung F über zwei Schraubbolzen 9 mit der Förderkette 2 befestigt. Die Förderkette ist eine Hohlbolzenkette. Die Tragglieder bzw. Mitnehmer aus gleitfähigem Kunststoff sind durch Bohrungen in der Hohlbolzenkette und durch entsprechende Bohrungen in den Kunststoffteilen bzw. Traggliedern geführt und sind leicht lösbar befestigt und mithin leicht austauschbar, insbesondere bei Verschleiß.

Beide vorgenannten Ausführungsvarianten von Fördereinrichtungen 1 sind sogenannte Raupenförderer, welche als Längsförderer und/oder als Querförderer ausgebildet sein können.

Ist der Raupenförderer als Längsförderer ausgebildet, weist er eine zusätzliche mittlere Unterstützung auf, insbesondere einen zusätzlichen mittleren Förderstrang nach Art der seitlichen Förderketten 2 und der Tragglieder 3, oder eine zusätzliche mittlere Rollen- oder Gleit-Leiste.

Eine Fördereinrichtung 1 der vorgenannten Art kann aus einzelnen in Förderrichtung F zusammensetzbaren, vorzugsweise zusammensteckbaren im wesentlichen gleich ausgebildeten Förderstrecken-Modulen entsprechend einer gewünschten Gesamtförderlänge eines Förderers aufgebaut sein.

## Patentansprüche

1. Fördereinrichtung (1) zum Fördern von Fördergut, vorzugsweise auf Paletten oder dergleichen, längs einer Förderstrecke mit zumindest zwei seitlichen angetriebenen umlaufenden Förderketten (2), an denen gleich und einstückig ausgebildete Tragglieder (3) angelenkt sind, auf denen das Fördergut oder die Palette auflastet, wobei die Tragglieder (3) längs der Förderketten dicht aneinander in Reihe angeordnet sind und die Förderketten (2) im wesentlichen abdecken, wobei die Tragglieder (3) ausschließlich Tragefunktion und die Förderketten (2) ausschließlich Zugfunktion besitzen, wobei die Tragglieder (3) eine flächige Oberseite (4) und zwei seitliche untere Gleitflächen (5) besitzen und auf stationären Schienen (6), insbesondere nichtrostenden Stahlschienen, auflastend gleiten und wobei die Tragglieder im Querschnitt im wesentlichen entweder eine umgekehrte U-Form oder eine Doppel-T-Form besitzen,
**dadurch gekennzeichnet, dass**
die Gleitflächen (5) auf der unteren Seite der beiden Vertikalstege der umgekehrten U-Form oder der Doppel-T-Form ausgebildet sind.

2. Fördereinrichtung nach Anspruch 1,
**dadurch gekennzeichnet,**
**daß** die Oberseite (4) der Tragglieder (3) in Förderrichtung (F) im Bereich der Förderkette (2) eine mittige flächige Vertiefung (7) aufweist.

3. Fördereinrichtung nach Anspruch 1 oder 2,
**dadurch gekennzeichnet,**
**daß** die Oberseite (4) der Tragglieder (3) in Förderrichtung (F) eine geringe Wölbung nach oben aufweist.

4. Fördereinrichtung nach einem der Ansprüche 1 bis 3,
**dadurch gekennzeichnet,**
**daß** die Schienen (6) Längsführungsfunktion für die Tragglieder (3) besitzen.

5. Fördereinrichtung nach einem der Ansprüche 1 bis 4,
**dadurch gekennzeichnet,**
**daß** jede umlaufende Förderkette (2) eigene Tragglieder (3) aufweist.

6. Fördereinrichtung nach einem der Ansprüche 1 bis 5,
**dadurch gekennzeichnet,**
**daß** die Tragglieder (3) zumindest zweischichtig ausgebildet sind und eine obere elastische Schicht besitzen, welche als nachgiebiges rutschfestes flächiges Tragpolster dient.

7. Fördereinrichtung nach einem der Ansprüche 1 bis 6,
**dadurch gekennzeichnet,**
**daß** jedes Tragglied (3) quer zur Förderrichtung (F) über zumindest einen, vorzugsweise zwei Schraubbolzen (9) mit der Förderkette (2) befestigt ist.

8. Fördereinrichtung nach einem der Ansprüche 1 bis 7,
**dadurch gekennzeichnet,**
**daß** sie als Längsförderer und/oder als Querförderer ausgebildet ist.

9. Fördereinrichtung nach Anspruch 8,
**dadurch gekennzeichnet,**
**daß** der Längsförderer eine zusätzliche mittlere Unterstützung aufweist, insbesondere eine zusätzliche mittleren Förderkette nach Art der seitlichen Förderketten (2) und deren Tragglieder (3), oder eine zusätzliche Rollen- oder Gleitleiste in der Mitte.

10. Fördereinrichtung nach einem der Ansprüche 1 bis 9,
**dadurch gekennzeichnet,**
**daß** die Förderketten (2) und Schienen (6) jeweils eine seitliche Wandverkleidung (12) besitzen.

11. Fördereinrichtung nach einem der Ansprüche 1 bis 10,
**dadurch gekennzeichnet,**
**daß** die Tragglieder (3) an der Förderkette (2) leicht lösbar befestigt und austauschbar sind.

12. Fördereinrichtung nach einem der Ansprüche 1 bis 11,
**dadurch gekennzeichnet,**
**daß** die Tragglieder Kunststoffteile, insbesondere Formteile, sind, welche vorzugsweise mit Selbstschmiereffekt, guter Gleitfähigkeit, guter Druckfestigkeit und/oder guter Schlagzähigkeit ausgestattet sind.

## Claims

1. A transport device (1) for transporting goods, preferably on pallets or the like, along a transport path with at least two said lateral, driven, rotating transport chains (2) to which support elements (3) are articulated which are identical and in one-piece design and by which said goods or said pallets are supported, wherein said support elements (3) are arranged at closely spaced locations next to one another in a row along the transport chains and they essentially cover the transport chains, and wherein said support elements (3) have exclusively a carrying function and said transport chains (2) have exclusively a traction function, and further said support elements (3) have a flat upper side (4) and two lower sliding surfaces (5) and slide on a stationary rails (6), especially stainless steel rails, being supported by same, and said support elements (3) have an essentially inverted U-shaped cross section or an essentially double T-shaped cross section,
**characterized in that**
said sliding surfaces (5) are formed onto the lower side of the vertical webs of said inverted U-shaped cross section or of said double T-shaped cross section.

2. A transport device in accordance with claim 1,
**characterized in that**
the upper side (4) of the support elements (3) has a middle flat depression (7) in the direction of transportation (F) in the area of the transport chain (2).

3. A transport device in accordance with claim 1 or 2,
**characterized in that**
the upper side (4) of the support elements (3) has a slight upward arch in the direction of transportation (F).

4. A transport device in accordance with one of the claims 1 through 3,
**characterized in that**
the rails (6) have a longitudinal guiding function for the support elements (3).

5. A transport device in accordance with one of the claims 1 through 4,
**characterized in that**
each said rotating transport chain (2) has said support elements (3) of its own.

6. A transport device in accordance with one of the claims 1 through 5,
**characterized in that**
the support elements (3) have an at least two-layer design and have an upper elastic layer, which acts as a flexible, skid-resistant, flat support pad.

7. A transport device in accordance with one of the claims 1 through 6,
**characterized in that**
each said support element (3) is fixed to the transport chain via at least one and preferably two said studs (9) at right angles to the direction of transportation (F).

8. A transport device in accordance with one of the claims 1 through 7,
**characterized in that**
it is designed as a longitudinal transporter and/or as a transverse transporter.

9. A transport device in accordance with claim 8,
**characterized in that**
the longitudinal transporter has an additional middle support, especially an additional middle transport strand in the manner of the lateral transport chains (2) and the support elements (3), or an additional roller or sliding strip in the middle.

10. A transport device in accordance with one of the claims 1 through 9,
**characterized in that**
the transport chains (2) and said rails (6) have a lateral wall cover (12).

11. A transport device in accordance with one of the claims 1 through 10,
**characterized in that**
the support elements (3) are fixed to the transport chain (2) in an easily detachable manner and can be replaced.

12. A transport device in accordance with one of the claims 1 through 11,
**characterized in that**
the support elements are plastic parts, especially moldings, which are preferably provided with a self-lubricating effect, good slidability, good compressive strength and/or good impact resistance.

## Revendications

1. Dispositif de transport (1) destiné à transporter des marchandises, de préférence sur des palettes ou similaires, le long d'un trajet de transport, comportant au moins deux chaînes de transport latérales, entraînées et périphériques (2), sur lesquelles sont montés en articulation des éléments porteurs (3) réalisés de manière identique et en un seul tenant et sur lesquels est chargée la marchandise ou la palette, dispositif dans lequel les éléments porteurs (3) sont agencés en rangée très proches l'un de l'autre le long des chaînes de transport et recouvrent sensiblement les chaînes de transport (2), dans lequel les éléments porteurs (3) ont exclusivement une fonction de portée et les chaînes de transport (2) ont exclusivement une fonction de traction, dans lequel les éléments porteurs (3) possèdent une face supérieure plane (4) et deux surfaces de glissement inférieures (5) et glissent en étant chargés sur des rails stationnaires (6), en particulier sur des rails en acier inoxydable, et dans lequel les éléments porteurs possèdent essentiellement dans la section transversale soit une forme de U inversé, soit une forme de double T,
**caractérisé en ce que** les surfaces de glissement (5) sont réalisées sur le côté inférieur des deux branches verticales de la forme de U inversé ou de la forme de double T.

2. Dispositif de transport selon la revendication 1,
**caractérisé en ce que** la face supérieure (4) des éléments porteurs (3) présente un renfoncement plan central (7) dans la direction de transport (F) dans la région de la chaîne de transport (2).

3. Dispositif de transport selon l'une ou l'autre des revendications 1 ou 2,
**caractérisé en ce que** la face supérieure (4) des éléments porteurs (3) présente une faible courbure vers le haut dans la direction de transport (F).

4. Dispositif de transport selon l'une des revendications 1 à 3,
**caractérisé en ce que** les rails (6) possèdent une fonction de guidage longitudinal pour les éléments porteurs (3).

5. Dispositif de transport selon l'une des revendications 1 à 4,
**caractérisé en ce que** chaque chaîne de transport périphérique (2) présente de propres éléments porteurs (3).

6. Dispositif de transport selon l'une des revendications 1 à 5,
**caractérisé en ce que** les éléments porteurs (3) sont réalisés au moins avec deux couches et possèdent une couche supérieure élastique qui sert de matelassure portante plane, souple et anti-glissante.

7. Dispositif de transport selon l'une des revendications 1 à 6,
**caractérisé en ce que** chaque élément porteur (3) est fixé à la chaîne de transport (2), perpendiculairement à la direction de transport (F), par l'intermédiaire d'au moins un, de préférence deux boulons filetés (9).

8. Dispositif de transport selon l'une des revendications 1 à 7,
**caractérisé en ce qu'**il est réalisé comme transporteur longitudinal et/ou comme transporteur transversal.

9. Dispositif de transport selon la revendication 8,
**caractérisé en ce que** le transporteur longitudinal présente un soutien central supplémentaire, en particulier une chaîne de transport centrale supplémentaire à la manière des chaînes de transport latérales (2) et de leurs éléments porteurs (3), ou un listeau à rouleaux supplémentaire ou un listeau de glissement supplémentaire au centre.

10. Dispositif de transport selon l'une des revendications 1 à 9,
**caractérisé en ce que** les chaînes de transport (2) et les rails (6) possèdent respectivement un revêtement latéral de paroi (12).

11. Dispositif de transport selon l'une des revendications 1 à 10,
**caractérisé en ce que** les éléments porteurs (3) sont fixés sur la chaîne de transport (2) de manière facilement détachable et qu'ils peuvent être remplacés.

12. Dispositif de transport selon l'une des revendications 1 à 11,
**caractérisé en ce que** les éléments porteurs sont des pièces en matière plastique, en particulier des pièces moulées, qui sont équipées de préférence d'un effet autolubrifiant, d'un bon pouvoir glissant, d'une bonne résistance à la pression et/ou d'une bonne résilience.
